# EUROPEAN PATENT SPECIFICATION

(11) **EP 1 645 452 B1**
(45) Date of publication and mention of the grant of the patent: **27.05.2009**
(21) Application number: 05109290.6
(22) Date of filing: 06.10.2005
(51) Int. Cl.: B60K 15/03, F01N 3/20

(54) **Integrated tank for urea, vehicle provided with this tank and method for storing urea solutions on a vehicle**
Integrierter Harnstoffbehälter, Kraftfahrzeug ausgestattet mit einem solchen Behälter und Verfahren zum Aufbewahren von Harnstofflösungen in einem Kraftfahrzeug
Réservoir d'urée intégré, véhicule équipé d'un tel réservoir et procédure de stockage de solutions d'urée dans un véhicule

(30) Priority: 08.10.2004 IT MI20041908
(43) Date of publication of application: 12.04.2006
(73) Proprietor: IVECO S.p.A., 10156 Torino (IT)
(72) Inventor: Manfioletti, Maurizio, 29100 Piacenza (IT)
(74) Representative: Borsano, Corrado

(56) References cited:
- EP-A- 0 976 677
- EP-A- 1 388 648
- US-B1- 6 223 526

## Description

### SCOPE OF INVENTION

This invention relates to a fuel tank, particularly to a diesel fuel tank, suitable for vehicles - in particular for industrial vehicles - and a vehicle equipped with said tank.

### PRIOR ART

A problem of great importance for internal combustion engines - particularly for supercharged and non-supercharged diesel engines - is the formation of nitrogen oxides during combustion; nitrogen oxides are discharged with exhaust gases in the engine and represent one of the main pollutants. A number of solutions to reduce the formation of such compounds has been proposed but their level in exhaust gases can still be considered a problem and, even in view of the increasingly strict law regulations, it will have to be necessary to use nitrogen oxide reduction systems in exhaust gases. One of the solutions is known as the SCR system (Selective Catalytic Reduction); it is based upon the reaction, supported by an appropriate catalytic system, between the nitrogen oxides in the exhaust gases and ammonia appropriately introduced as a reducing agent. Under normal conditions, the ammonia comes from urea hydrolysis, which is fed to the catalytic system carried by an air current or in another appropriate way. Therefore, the vehicles equipped with this type of reduction system must be provided with an urea supply, generally a special tank to be filled with a solution of such compound; as a rule, urea aqueous solutions are used, preferably close to the eutectic composition (about 32.5% in urea by weight). On industrial vehicles, where this reduction system finds one of its main field of application, the urea tank can be placed next to the fuel tank; it is commonly located externally, thus exposed to ambient temperature. A problem related to the use of urea solutions, although it concerns a eutectic composition, is the relatively high freezing point (about - 11°C), which therefore requires heating systems for the tank, for uses at ambient temperatures lower than such limit; all this represents an additional problem when manufacturing and managing such systems. Furthermore, this may delay the effectiveness of the system as regards the start of the vehicle.

Therefore, the need is felt of reducing the exposure of the urea tank to low external temperatures and to keep the solution at appropriate temperatures, thereby reducing or eliminating the use of special heating devices. A prolongation of the urea freezing time would result in avoiding falling back on special heating devices (for example, engine cooling water circulation in special exchangers) or other external heaters or allow to reduce the size of such devices.

US 6 223 526 discloses an integrated tank for a vehicle including a fuel space and a reducing agent space and the latter can be located inside the fuel space.

EP 1 388 648 discloses a method and system for heating potentially frozen urea. According to an embodiment, the urea tank is contained in the fuel tank.

Heat can thus, according to the above documents, be exchanged between the fuel and the urea tank, but this can lead to overheating of the solution and possible decomposition. Moreover, the tanks disclosed in the above cited documents are difficult to assemble and to disassemble for possible maintenance.

### SUMMARY OF THE INVENTION

The problems mentioned above have now been solved with a system for storing urea solutions on a vehicle, which comprises a fuel tank delimited by a first wall, preferably diesel fuel, and a tank, delimited by a second wall for said solution, both tanks being able to reciprocally exchange heat through said walls, the wall of said fuel tank having a concavity at least partly containing such solution tank.

According to an aspect of the invention, the solution tank is entirely contained in the concavity.

Preferably, there is an interspace between the walls of the two tanks. There can be fastening devices between the two tanks.

The invention also applies to a vehicle, preferably an industrial vehicle, provided with the above system.

A particularly interesting part of the invention is given in the attached claims.

### LIST OF FIGURES

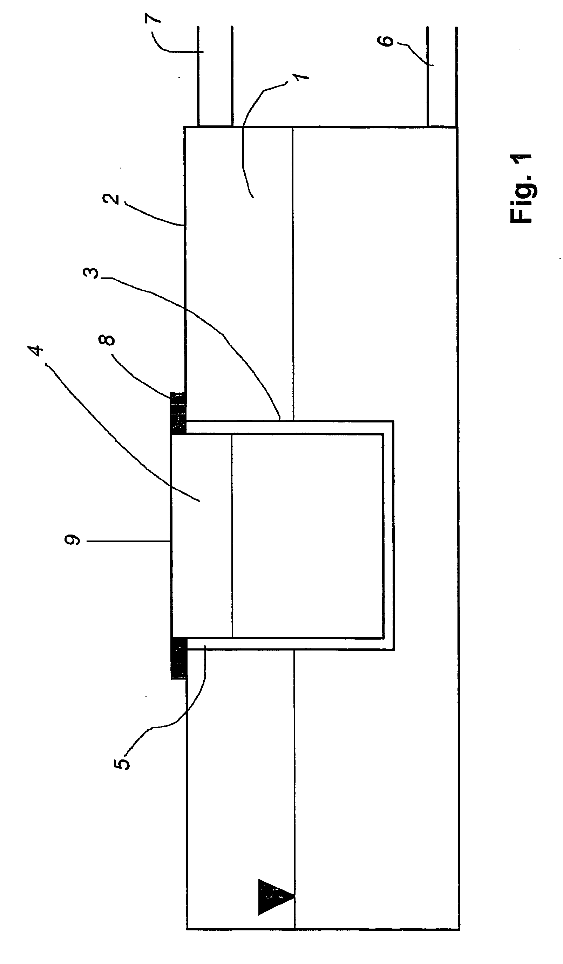

This invention will now be described through a detailed description of preferred but not exclusive embodiments, given only as an example, with the aid of the enclosed figure 1 which schematically shows the side view of a system based on this invention.

### DETAILED DESCRIPTION OF AN EMBODIMENT

Figure 1 schematically represents a system based on a preferred aspect of this invention; this system is suitable for being installed on an industrial vehicle. It includes a fuel tank 1, the fuel, for industrial vehicles, being preferably diesel fuel. The fuel tank has shape and size adapted to its use, for example, it is suitable for being fastened under the flatcar of an industrial vehicle, which is a typical position for said vehicles. Standard fastening systems can be used.

The fuel tank has a wall 2, which has an appropriately shaped and positioned concavity 3. The urea solution tank 4 is housed inside the concavity. The concavity 3 may advantageously have a shape that corresponds to that of the solution tank (4), so as to house the latter, thereby leaving at most an interspace (5) between the walls of the two tanks. This facilitates the reciprocal assembly of the tanks and makes it possible to maintain the heat exchange between the two tanks at adequate values, bearing in mind that by heating the urea solution, decomposition phenomena may arise, thus, the temperature of the solution should be preferably kept below 70, or more preferably, below 60 °C.

Under normal conditions, when the vehicle has a Diesel engine, the tank 1 is a diesel fuel tank; this tank 1 has a line 6 for drawing the diesel fuel and a line 7 for reintroducing it into the tank 1; as a matter of fact, the control of the amount of diesel fuel fed to the cylinders occurs commonly by reflux, hence part of the diesel fuel will continuously return to the tank 1 through the line 7. This will heat up, when the engine is running, the diesel fuel in the tank. The configuration of the system according to the present invention allows part of the heat of the diesel fuel to be transferred to the solution contained in the solution tank 4. By doing so, the solution can be easily kept at an adequate temperature, hence far from the freezing point. The fuel tank thermally shields the urea solution tank from the external environment, thereby preventing the freezing of the solution when the engine is running, but also after it has been stopped for a significant period of time, partly thanks to the heat accumulated by the fuel when running and when a reflux fuel metering system is used, as described above.

Connecting devices may be used between the two tanks, for example the solution tank may have a flange 8, which allows for standard fastening to the fuel tank.

According to a preferred aspect of the invention, the solution tank has a wall that can be accessed from the outside 9. It can be preferably reached from the top and it is located on the upper part of the fuel tank 1. Thus, the cavity 3, which can be accessed from the top part, can extend vertically into the fuel tank; for example, the cavity 3 and the solution tank 4 can be in the shape of a cylinder or parallelepiped. The size and shape of these structures, including the ratios between the height and the cross section (according to a horizontal plane) can be chosen according to the desired thermal exchange values. The configuration of figure 1, as well as other possible configurations that the skilled in the art may easily determine, have an extra benefit: the heat exchange is strongly affected by the fuel level in the tank 1. It is apparent that a low level of fuel corresponds to a lower exchange surface; when the flow rate adjustment of fuel to the engine is carried out by reflux, as described above,the less is the level, the quicker will be the heating of the (diesel) fuel in the tank, hence more capable of producing higher temperatures,. It will therefore be obtained a self-adjusting mechanism of the heat transferred from the fuel to the urea solution, which will make it possible to rapidly obtain adequate, but not excessive, temperatures of the solution, yet considering that the diesel fuel, through the flow rate adjustment by reflux as described above may reach, in extreme conditions, temperatures above 80 °C and even up to 100 °C. by taking this fact into consideration, dimensional and structural parameters of the system may be chosen, such as the width-height ratio of the tanks, the ratio between their dimensions, the thickness of the interspace (for example, values of the latter, between 5 and 15 mm, can be used for most applications).

The fuel tank also includes, as usual, structures for the introduction of fuel, located in appropriate positions.

The invention also concerns a method for storing an urea solution on a vehicle, including the introduction of urea solution into the solution tank, liquid fuel into the fuel tank, the removal of part of this liquid fuel to supply a feed line of a combustion engine, the recirculation of part of the removed liquid fuel to the fuel tank, heat transfer from the fuel inside the fuel tank to the solution inside the solution tank.

The present invention can eliminate the use of special heaters for urea in most conditions of use of the vehicles, or limit their use to extreme weather conditions as well for extended vehicle stops, with a reduced sizie compared to the commonly needed size.

## Claims

1. System for storing urea solutions on a vehicle including a fuel tank (1) delimited by a first wall (2) and a tank for said solution (4) delimited by a second wall, the two tanks being adapted to reciprocally exchange heat, **characterized by** the fact that the wall (2) of the fuel tank has a concavity (3), at least partly containing said solution tank (4), the tanks reciprocally exchanging heat through said walls.

2. System according to claim 1, **characterized by** the fact that said fuel tank is a diesel fuel tank.

3. System according to any of the previous claims, **characterized by** the fact that said solution tank is entirely contained in said concavity.

4. System according to any of the previous claims, **characterized by** the fact that there is an interspace (5) between the walls of the two tanks.

5. System according to any of the previous claims, **characterized by** the fact that said fuel tank is equipped with a line (6) for drawing diesel fuel and a line (7) for reintroducing it into the tank.

6. Industrial vehicle, equipped with a system according to any of the previous claims.

7. Method for storing an urea solution on a vehicle, comprising the introduction of urea solution into the solution tank, liquid fuel into the fuel tank of a system according to claim 5, the removal of part of said liquid fuel to supply a feed line of a combustion engine, the recirculation of part of the removed liquid fuel to the fuel tank, heat transfer from the fuel inside the fuel tank to the solution inside the solution tank.

## Patentansprüche

1. System zum Speichern von Harnstofflösungen an einem Fahrzeug, enthaltend einen Treibstofftank (1), der durch eine erste Wand (2) begrenzt ist, und einen Tank für die Lösung (4), der durch eine zweite Wand begrenzt ist, wobei die zwei Tanks angepasst sind, wechselseitig Wärme auszutauschen, **gekennzeichnet durch** die Tatsache, dass die Wand (2) des Treibstofftanks eine Konkavität (3) aufweist, die zumindest teilweise den Lösungstank (4) enthält, wobei die Tanks wechselseitig **durch** die Wände Wärme austauschen.

2. System nach Anspruch 1, **gekennzeichnet durch** die Tatsache, dass der Treibstofftank ein Dieseltreibstofftank ist.

3. System nach einem der vorstehenden Ansprüche, **gekennzeichnet durch** die Tatsache, dass der Lösungstank vollständig in der Konkavität enthalten ist.

4. System nach einem der vorstehenden Ansprüche, **gekennzeichnet durch** die Tatsache, dass es einen Zwischenraum (5) zwischen den Wänden der zwei Tanks gibt.

5. System nach einem der vorstehenden Ansprüche, **gekennzeichnet durch** die Tatsache, dass der Treibstofftank mit einer Leitung (6) zum Absaugen von Dieseltreibstoff und eine Leitung (7) zum Wiedereinführen davon in den Tank ausgestattet ist.

6. Industriefahrzeug, ausgestattet mit einem System nach einem der vorstehenden Ansprüche.

7. Verfahren zum Speichern einer Harnstofflösung auf einem Fahrzeug, umfassend das Einfüllen von Harnstofflösung in den Lösungstank, Flüssigtreibstoff in den Treibstofftank eines Systems nach Anspruch 5, das Entfernen eines Teils des Flüssigtreibstoffs, um eine Zuführungsleitung eines Verbrennungsmotors zu versorgen, die Rückzirkulation eines Teils des entfernten Flüssigtreibstoffs in den Treibstofftank, einen Wärmetransfer von dem Treibstoff innerhalb des Treibstofftanks zu der Lösung innerhalb des Lösungstanks.

## Revendications

1. Système pour stocker des solutions d'urée sur un véhicule, comprenant un réservoir de carburant (1) délimité par une première paroi (2) et un réservoir pour ladite solution (4) délimité par une seconde paroi, les deux réservoirs étant adaptés pour échanger de la chaleur réciproquement,
**caractérisé en ce que** la paroi (2) du réservoir de carburant a une concavité (3), contenant au moins en partie ledit réservoir de solution (4), les réservoirs échangeant réciproquement de la chaleur à travers lesdites parois.

2. Système selon la revendication 1, **caractérisé en ce que** ledit réservoir de carburant est un réservoir de carburant Diesel.

3. Système selon l'une quelconque des revendications précédentes, **caractérisé en ce que** ledit réservoir de solution est entièrement confiné dans ladite concavité.

4. Système selon l'une quelconque des revendications précédentes, **caractérisé en ce qu'**il y a un espace intermédiaire (5) entre les parois des deux réservoirs.

5. Système selon l'une quelconque des revendications précédentes, **caractérisé en ce que** ledit réservoir de carburant est équipé d'une ligne (6) pour extraire le carburant Diesel, et d'une ligne (7) pour le réintroduire dans le réservoir.

6. Véhicule industriel, équipé d'un système selon l'une quelconque des revendications précédentes.

7. Procédé de stockage d'une solution d'urée sur un véhicule, comprenant l'introduction d'une solution d'urée dans le réservoir de solution, d'un carburant liquide dans le réservoir de carburant d'un système selon la revendication 5, le retrait d'une partie dudit carburant liquide pour alimenter une ligne d'alimentation d'un moteur à combustion, la remise en circulation d'une partie du carburant liquide retiré vers le réservoir de carburant, et un transfert de chaleur depuis le carburant à l'intérieur du réservoir de carburant vers la solution située à l'intérieur du réservoir de solution.
